# EUROPEAN PATENT SPECIFICATION

(11) **EP 2 171 314 B1**
(45) Date of publication and mention of the grant of the patent: **02.01.2013**
(21) Application number: 08760300.7
(22) Date of filing: 30.05.2008
(51) Int. Cl.: F16H 57/12, F16H 57/02

(54) **METHOD OF PROVIDING A PREDETERMINED BACKLASH FOR A TRANSMISSION, A FIRST TOOTHED GEAR AND A METHOD FOR APPLYING A SHEET OF SPACER MATERIAL TO AT LEAST PART OF AN UPRIGHT SIDEWALL OF A FIRST TOOTHED GEAR**
VORRICHTUNG ZUR BEREITSTELLUNG EINES VORBESTIMMTEN SPIELS FÜR EIN GETRIEBE, EIN ERSTES ZAHNRAD UND VERFAHREN ZUM ANBRINGEN EINER LAGE ABSTANDSMATERIAL AN MINDESTENS EINEM TEIL EINER AUFRECHTEN SEITENWAND EINES ERSTEN ZAHNRADS
PROCÉDÉ D'OBTENTION D'UN JEU PRÉDÉTERMINÉ POUR UNE TRANSMISSION, PREMIÈRE ROUE DENTÉE ET PROCÉDÉ D'APPLICATION D'UNE FEUILLE DE MATÉRIAU D'ÉCARTEMENT À AU MOINS UNE PARTIE D'UNE PAROI LATÉRALE DROITE D'UNE PREMIÈRE ROUE DENTÉE

(30) Priority: 30.05.2007 EP 07109226
(43) Date of publication of application: 07.04.2010
(73) Proprietor: VCST Industrial Products, 3800 Sint-Truiden (BE)
(72) Inventor: VANDEWAL, Bart, B-3570 Alken (BE)
(74) Representative: Luys, Marie-José A.H.
(86) International application number: PCT/EP2008/056713
(87) International publication number: WO 2008/145741

(56) References cited:
- WO-A-02/48575
- WO-A-2004/051116
- DE-A1- 3 934 377

## Description

The present invention relates to a method of providing a predetermined backlash for a transmission comprising at least a first and a second interlocking toothed gear, according to the preamble of the first claim and as it is known from document WO 02/48575 A2.

The present invention also relates to a first toothed gear and a method for applying a sheet of spacer material to at least part of an upright sidewall of a first toothed gear.

The tooth profile interlocking clearance between two mating gears of a gear transmission, the backlash, and in particular the rotational backlash, is known to create a hydrodynamic lubrication, compensating for dimensional changes caused by temperature effects, preventing abrasion or premature wear of the shaft, axles and toothed gears, and compensating bad construction and assembly work. In the serial production of engines, gears or other aggregates, providing a predetermined backlash to two or more toothed gears in mesh (serrated, helical, or other) pressed, screwed or secured otherwise onto driven or secondary shafts, requires elaborate alignment equipment or alignment devices.

WO2002/048575 describes a method of providing a predetermined backlash for a transmission comprising at least a first and a second interlocking toothed gear. The backlash according to this method is provided by positioning the first and the second gear with respect to each other by means of spacer means in the form of a removable coating applied to the upright sidewalls of the teeth of the first gear, the upright sidewalls being provided to face the teeth of the second gear. The first and second gear are positioned with respect to each other by adjusting their mutual position until they are positioned substantially play-free with respect to each other. Afterwards the coating is mechanically, by rotational action of the gears during the test run of the engine in which they are incorporated, or chemically, by use of a solvent, removed from the first gear.

However, the method disclosed in W02002/048575 is relatively difficult since application of the coating onto the upright sidewalls of the teeth of the gear is difficult. It is for example difficult, and therefore rather expensive, to adjust the thickness of the coating.

There is thus a need for a method to provide a predetermined backlash to a transmission comprising a first and a second interlocking toothed gear using spacer means which can be more easily applied to a tooth of the gear.

Accordingly it is an object of the present invention to provide a method in which spacer means are used which can be more easily applied to the upright sidewalls of the teeth.

This is achieved according to the present invention with a method showing the technical features of the characterizing portion of the first claim.

Thereto, the application of the spacer means comprises the step of gluing a surface of a sheet of spacer material to the upright sidewall of the first tooth.

The inventor has found that gluing a sheet of spacer material onto the upright sidewall of the first tooth offers an alternative to the use of a coating to provide the correct backlash to the first and the second gear. The inventor found moreover that application of the sheet of spacer material is significantly easier by gluing the spacer material than by coating the upright sidewalls of the teeth of the gear.

The inventor also found that the different aspects of the spacer means, such as the thickness of the spacer means substantially determining the backlash, can be more easily controlled with a sheet of spacer material than with a coating.

The use of a sheet of spacer material for providing two gears with a predetermined backlash is already known to the person skilled in the art from for example:
- DE-Z "Dampf 20", Modell-Spezial, Neckar-Verlag GmbH, Klosterring 1, Villingen-Schwenningen, ISBN-3-7883-0609-02, using a sheet of thin cardboard to provide the predetermined backlash and
- page 338 of the Hoffmann Qualitätswerkzeuge catalog from 1981 of the company Fa. Hoffmann GmbH & Co. KG, München, Haberlandstrasse 55 in which sheets of steel, stainless steel and messing are described which can be used to provide the predetermined backlash as described in EP1101979B1.

These publications however do not describe that the sheet of spacer material is glued to the upright sidewall of the first tooth. The sheet of thin cardboard is only introduced in between the first and second gear during provision of the predetermined backlash to the first and second gear. This way of providing the predetermined backlash necessitates that the sheet of cardboard is provided while providing the predetermined backlash to the first and second gear, resulting in an additional step to be performed while providing the predetermined backlash.

The inventor has found that by gluing the sheet of spacer material to the upright sidewall of the first tooth, the first gear and second gear can be provided with the predetermined backlash without having to perform the additional step of providing the spacer means during provision of the desired backlash. Moreover, the position of the spacer means during provision of the desired backlash is already determined, resulting in a faster provision of the backlash. Moreover, when the sheet of spacer material has been glued to the upright sidewall before providing the first and the second gear with the predetermined backlash, the predetermined backlash can be provided more precisely, since shifting of the spacer means in between the first and second gear is prohibited by the glue. Moreover, the sheet of spacer material does no longer need to be removed after providing the gears with the predetermined backlash, since the risk that the sheet of spacer material ends up in, for example, the oil of the gears is significantly reduced.

The spacer material preferably comprises a material which is compressible to such an extent that it does not affect engine operation while retaining enough rigidity for the predetermined backlash to be correctly provided.

The inventor has found that such spacer means do not need to be removed from the first gear and can remain onto the first gear.

The sheet more preferably comprises a material which is elastic along a planar direction of the sheet. The inventor has found that such sheets of spacer fabric can be applied to gears having teeth running along directions which are not parallel to the rotational axis of the gears.

In a preferred embodiment of the method of the current invention, the surface of the sheet of spacer material comprises a layer of glue for gluing the surface to the upright sidewall of the first tooth.

The inventor has found that by providing the surface of the sheet of spacer material with glue, the sheet of spacer material can be more easily applied to the upright sidewall of the first tooth.

According to a preferred embodiment, the spacer material comprises any one of the following: paper, polypropylene (PP), polyethylene (PE), metal, such as for example aluminum foil, polyethylene terephthalate (PET), polyvinyl chloride (PVC), polystyrene (PS), etc.

The inventor has found that these materials all have a compressibility allowing that engine operation is not affected while having enough rigidity for the predetermined backlash to be correctly provided.

The inventor has moreover found that polypropylene and polyethylene have an elasticity along a planar direction of the sheet which allows the layer of spacer material to be applied onto a wide range of toothed first gears with a decreased risk for buckling to occur, for example in gears in which the teeth run along directions which are not parallel to the rotational axis of the gears, i.e. helical gears, as described above.

According to a preferred embodiment, the glue is a pressure sensitive adhesive, for example comprising an acrylic glue.

The inventor has found that such glues allow an improved attachment of the spacer material to the upright sidewall of the first tooth since they respond with an improved gluing action when pressure, here for example caused by periodical interlocking of the first tooth in teeth of the second gear, is applied to it.

In a preferred embodiment the sheet of spacer material is applied to opposing upright sidewalls of adjacent first teeth of the first gear.

The inventor has found that, generally, in that case the thickness of the sheet of spacer material corresponds with half the size of the desired predetermined backlash.

In a further preferred embodiment of the method of the current invention the first and/or second gear comprises indicating means for positioning the first tooth adjacently to the second tooth.

The inventor has found that such indicating means greatly facilitate the mounting of the two gears to each other so that the predetermined backlash can be provided since it is for example no longer necessary for an operator to look for the location where the spacer means are provided in order to place the first tooth adjacent to the second tooth.

The invention also relates to a first toothed gear comprising subsequent first teeth provided to interlock with second teeth of a second gear wheel, at least part of an upright sidewall provided to face the second teeth at least partly being provided with spacer means, characterized in that the spacer means comprise a sheet of spacer material glued to the upright sidewall of the first tooth.

Other details and advantages of the methods and the gear according to the invention will become apparent from the enclosed figures and description of preferred embodiments of the invention.
Figure 1 shows an overview of a transmission.
Figure 2 shows a detail of figure 1.
Figure 3 shows another detail of figure 1.
Figure 4 shows an embodiment for applying spacer means to the first toothed gear.

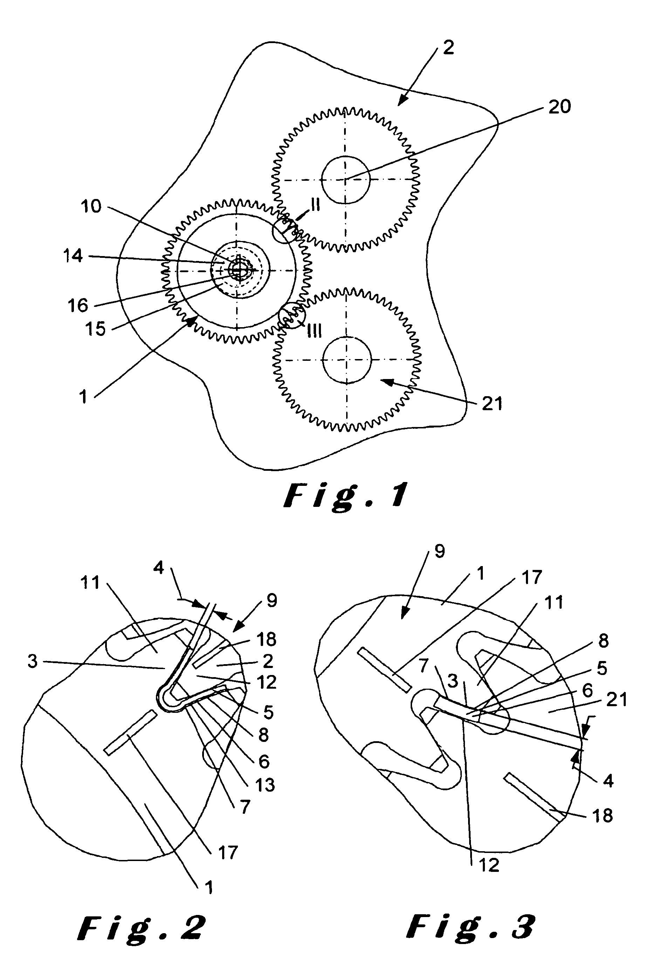

Fig. 1 shows a transmission comprising a first toothed gear 1 and a second toothed gear 2. The first gear 1 and the second gear 2 are positioned such that they can interlock with each other. The first gear 1 is for example fixed onto a first shaft 10 or rotatably mounted on for example a first bearing 14 while the second gear 2 is for example fixed onto a second shaft 20 or rotatably mounted on for example a second bearing.

The position of the first gear 1 with respect to the second gear 2 can be adjusted using a known excentric fixed bearing 14 or any other means for adjusting the position of the first gear 1 with respect to the second gear 2. Alternatively the position of the first gear 1 with respect to the second gear 2 can also be adjusted by other known means for adjusting the position of the second gear 2 with respect to the first gear 1.

In the example shown, the position of the first gear 1 with respect to the second gear 2 can be adjusted in directions in a plane substantially perpendicular to the first shaft 10, for example substantially horizontal and vertical directions as for example shown in figure 1, using an excentric adjustment mechanism, i.e. the excentric fixed bearing 14. Gear 1 can rotate on bearing 14 which can be moved in horizontal and vertical direction relative to a bolt 16. After assembly and adjustment the position can be fixed by tightening the bolt 16 so the bearing 14 is axially clamped between the bolt 16 and axial fixture means for example an axial fixture face of for example a mounting arrangement which is not shown in figure 1.

As is known from the state of the art, the backlash 4 between two adjacent gears of respectively the first 1 and second 2 gear can be adjusted by adjusting the position of the first gear 1 with respect to the second gear 2 with the help of spacer means 5.

The spacer means 5 are applied to at least part of an upright sidewall 3 of at least one first tooth 11 of the first gear 1. Examples of spacer means 5 which have been applied to the first tooth 11 are shown in figures 2 and 3.

After being applied to the upright sidewall 3, the mutual position of the first and the second gear 1, 2 is adjusted so that the first tooth 11, provided with the spacer means 5, interlocks substantially play-free with second teeth of the second gear 2, as shown in figure 2 and 3. In the example shown in figure 1 this is done by adjusting the position of the first gear 1 by the excentric fixed bearing 14.

The thickness of the spacer means 5 then substantially determines the backlash 4 between the first 1 and the second 2 gear wheel, as can be seen on figures 2 and 3.

The thickness of the spacer means 5 for example is between 25 micron - 120 micron. The thickness of the spacer means 5 preferably is between 25 micron - 60 micron.

The spacer means 5 preferably are rigid enough so that the thickness of the spacer means 5, and therefore the backlash 4, remains substantially uninfluenced by the pressure applied to the spacer means 5 by the tooth 12 of the second gear 2. The inventor has found that spacer means 5 who are sufficiently rigid allow the first and second gear 1, 2 to be positioned with respect to each other more easily and more precisely.

The inventor has moreover found that when the spacer means 5 are compressible enough so that its presence does not affect rotation of the gears 1, 2, the spacer means 5 can remain onto the first gear 1 during operation of the gears 1, 2 and need not be removed after provision of the predetermined backlash 4.

The choice of the rigidity and the compressibility is however not critical for the invention and spacer means 5 having a wide range of rigidities and compressibilities can be employed. Spacer means 5 with a relative high rigidity which could affect rotation of the gears 1, 2 can for example be removed after providing the predetermined backlash 4. Spacer means 5 with a relative high compressibility could be used to provide the predetermined backlash 4 by applying a predetermined force to the first and/or second gear when adjusting their mutual position to obtain the predetermined backlash 4.

Preferably, spacer means 5 are used which have a rigidity which allows the spacer means 5 to remain onto the first gear 1 during operation and a compressibility allowing the first gear 1 to be positioned with respect to the second gear 2 with an increased ease and precision.

The spacer means 5 comprise a sheet 6 of spacer material which is provided to be glued to the upright sidewall 3.

The sheet 6 can comprise any spacer material known to the person skilled in the art such as for example paper, polypropylene (PP), polyethylene (PE), metal, such as for example aluminum foil, polyethylene terephthalate (PET), polyvinyl chloride (PVC), polystyrene (PS), etc.

In a first example paper is used as spacer material. The inventor has found that paper will not affect rotation of the gears 1, 2 while remaining on the upright sidewall 3 because it has been found that paper has a compressibility which allows it to remain on the upright sidewall 3 while in operation. On the other hand the inventor has found that the material is rigid enough so that the compression of the thickness during adjustment of the mutual position of the first and second gear 1, 2 are substantially negligible.

The inventor also found that during operation, the paper material will be affected by for example heat, oil, abrasion, etc. of the second gear 2, especially the second teeth 12 of the second gear 2. This way, the inventor has found that particles of paper are released from the upright sidewall 3. The inventor has however found that the particles breaking away from the upright sidewall 3 are too small to substantially affect operation in a negative way. Moreover, the inventor has found that the particles will finally be caught in, for example, a filter, for example an oil filter of an engine comprising the transmission.

In a second example a sheet is used which is resilient along a planar direction of the sheet. The inventor has found that such spacer means 5 allow an easier application of the spacer means 5 to the first tooth 11, especially when the first gear 1 is a helical gear. The spacer material in such case for example comprises polypropylene, polyethylene and/or any one of: metal, such as for example aluminum foil, polyethylene terephthalate (PET), polyvinyl chloride (PVC), polystyrene (PS), etc. having a desired elasticity such that the application becomes more easy.

Preferably, the glue is a pressure sensitive adhesive which is generally activated when pressure is applied to the spacer means, for example when positioning the mutual position of the first and the second gear 1, 2. Such glue is for example an acrylic based glue. Any other glues known to the person skilled in the art are however also possible such as for example heat or UV activated adhesives or adhesives which are activated via a chemical reaction of a second element like two-component based glues.

Possible more specific examples of glue are for example contact glue, for example mixtures of naphtha, cyclohexane, butanone (methylethylketone (MEK)), etc., polyvinyl esters, polymer hydrocarbons, polyacrylic acid esters, ethane vinyl acetate copolymers, etc.

Preferably, the thickness of the layer of glue 7 together with the thickness of the spacer means 5 is adapted to the desired backlash.

Preferably, a layer of glue 7 has been applied to a layer of the sheet 6 of spacer material before being applied to the first gear 1. This way the sheet 6 can be directly applied to the first tooth 11 without having to apply glue to the upright sidewall 3 of the first tooth 11 and subsequently applying the sheet 6 of spacer material, which is also possible. The inventor has found that such application of a layer of glue is far more easy and precise.

The thickness of the sheet 6 preferably is substantially the same along the sheet 6. This is however not critical for the invention and the thickness of the sheet 6 may vary.

Although it is sufficient to provide only part of the upright sidewall 3 of the first tooth 11 with spacer means 5, substantially the entire upright sidewall 3 in upward direction or axial direction of the gear or both can be provided with spacer means 5. Figure 3 for example shows that a sheet 6 of spacer material is glued to substantially one entire upright sidewall 3 of one first tooth 11. In this case the thickness of the spacer means 5 substantially equals the backlash 4, as indicated on figure 3.

Alternatively, more than one upright sidewall 3 can be provided with spacer means 5. Figure 2 for example shows that spacer material is applied to opposing upright sidewalls 3, 13 of subsequent first teeth of the first gear 1. In case the thickness of the spacer means 5 on the opposing upright sidewalls of the subsequent first teeth is substantially identical, the thickness of both spacer means 5 substantially equals half of the backlash 4, as indicated on figure 2.

Using the preferred thicknesses for the spacer means 5 of between 25 micron - 60 micron, for example, by applying the spacer means 5 to opposing upright sidewalls of adjacent first teeth of the first gear, the thickness of the spacer means 5 can be used to obtain a backlash which is between 50 micron - 120 micron. By, for example, applying only a single opposing upright sidewall of adjacent first teeth of the first gear a backlash can be obtained, with this range of thicknesses, which is between 25 micron - 60 micron.

Although separate spacer means 5 can be applied to different upright sidewalls of the first teeth 11 of the first gear 1, single spacer means 5 can also extend over different subsequent first teeth 11 of the first gear 1, as shown in figure 2. In such case the sheet 6 of spacer material preferably extends along circumferential direction of the first gear 1 in the form of a strip which is pressed on and between several first teeth 1, 13 of the first gear 1. Although figure 2 only shows that the sheet extends over two upright sidewalls 3 of subsequent first teeth 1, the sheet 6 can also extend over more than two upright sidewalls 3 of subsequent first teeth for example, 3, 4, 5, 6, 7 or more upright sidewalls 3. The sheet 6 can for example also extend over at least the entire circumference of the first gear 1.

Although figure 2 and 3 show that only the first gear 1 is provided with spacer means 5, the spacer means 5 can also be partly provided to the second gear 2.

As shown in figure 1, the spacer means 5 can also be applied to non-subsequent first teeth 11 of the first gear 1. The inventor has found that by adding spacer means 5 to non-subsequent first teeth 11 of the first gear 1 the first gear 1 can be positioned with respect to additional second gears 21 with a predetermined backlash 4 without having to apply spacer means 5 to the entire circumference of the first gear 1. The thickness of the different spacer means 5 applied to the non-subsequent first teeth 11 of the first gear 1 can also be the same or can be different depending from the backlash 4 desired at the respective second gear 2.

Although figure 1 shows only two second gears 2, 21, also more than two second gears 2, 21 can be provided to engage the first gear 1. This however can be determined by the person skilled in the art.

More than one gear can be provided with means to adjust the relative position of the gear and its mating gears and/or also more than one gear can be provided with spacer means, especially when the relative position of more than two mating gears need to be adjusted with respect to each other in order to adjust the desired backlash between the different mating gears. This however depends on the number of gears used and their general relative position with respect to each other and can be determined by the person skilled in the art.

To position the first tooth 11 comprising the spacer means 5 adjacently to the second tooth 12 to provide the correct predetermined backlash 4 between the first gear 1 and the second gear 2, the first 1 and/or second 2 gear preferably comprises indicating means 9. The indicating means 9 can for example comprise a first mark 17 on the first gear 1 and a second mark 18 on the second gear 2 such that when the two marks 17, 18 are aligned the first tooth 11 and the second tooth 12 are positioned adjacently such that the upright sidewall 3 faces the second tooth 2, as shown in figures 2 and 3. The marks 17, 18, although not critical for the invention, may be positioned in the vicinity of the first 11 and second 12 tooth respectively, as shown in figures 2 and 3.

The marks 17, 18 can take any shape and dimensions such as for example an arrow, a line, etc.

The sheet 6 may be glued to the upright sidewall 3 in any way known to the person skilled in the art.

Preferably however, the sheet 6 of spacer material is applied to at least part of the upright sidewall 3 of the first tooth 11 of the first gear 1 by interlocking the first gear 1 with an application gear 19, the first tooth 11 interlocking with teeth 22 of the application gear 19 so that at least part of the upright sidewall 3 faces the teeth 22 of the application gear 19. The sheet 6 of spacer material is transported in between the interlocking teeth of the first gear 1 and the application gear 19 by rotational movement of the first gear 1 and the application gear 19.

The application gear 19 can be the second gear 2 or can be a separate gear, for example only used to apply the sheet 6 to the first gear 1.

In case a layer of the sheet 6 of spacer material comprises a layer of glue 7 facing the first tooth 11 of the first gear 1, the sheet 6 can be glued directly to the first tooth 11 without having to apply glue to the first tooth 11 or the sheet 6 in a separate manipulation.

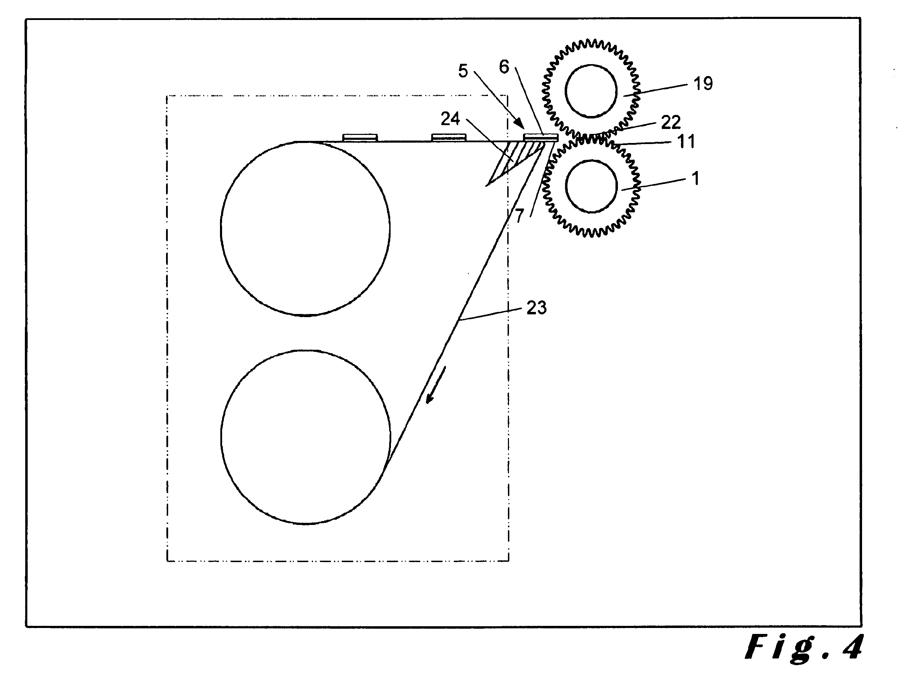

The sheet 6 of spacer material preferably is transported by transporting means to the engaging set of first gear 1 and application gear 19 along a first direction on a carrier sheet 23 to which the sheet 6 has been temporarily glued by the layer of glue 7. The sheet 6 is then peeled off the carrier sheet 23 by peel off means 24 such that part of the sheet 6, which is peeled off, extends towards the engaging set of the first gear 1 and the application gear 19 such that it is gripped in between them and subsequently pressed and glued onto the first tooth 11 of the first gear 1. Such a configuration is for example shown in figure 4.

Preferably, the carrier sheet 23 is transported together with the spacer means 5 glued to it when the spacer means 5 are transported in between the first 1 and application 19 gear.

As can be seen in figure 4, the carrier sheet 23 can be rolled up before, after or even both before and after application of the spacer means 5 to the first gear 1. This is however not critical for the invention.

The peel off means 24 can be determined by the person skilled in the art and can for example be an edge, preferably a sharp edge, over which the carrier sheet 23 is pulled along a second direction crossing the first direction, as shown in figure 4, such that the sheet 6 is peeled off the carrier sheet 23.

After application of the spacer means 5 to the first gear 1, another first gear 1 can be positioned interlockingly with the application gear 19 after which another sheet 6 can be pulled in between the application gear 19 and the subsequent first gear 1. This way several first gears 1 can be automatically provided with spacer means 5.

Preferably, the carrier sheet 23 thereto comprises several sheets 6 glued to it along the first direction so that upon movement of the carrier sheet 23 along the first direction subsequent sheets 6 are presented to the assembly of the application gear 19 and the corresponding first gear 1.

Preferably, the first gear 1 has a rotational position with respect to the spacer means 5 provided to the engaging set which is such that the spacer means 5 are applied to the desired first tooth or teeth. The first gear 1 preferably is brought into the desired rotational position by rotating the application gear 19 interlocking with the first gear 1. However, the desired rotational position of the first gear 1 can also be applied by rotatingly driving the first gear 1 before it interlocks with the application gear 19 or when interlocking with the application gear 19.

Preferably, the first gear 1 rotates over a predefined angle of rotation which is for example defined by the number of teeth which need to be provided with the spacer means 5. The first gear 1 can either be directly rotationally driven or can be rotationally driven by the application gear 19. Preferably, the first gear 1 is driven by the application gear 19.

Preferably, the rotational position of the first gear and/or the angle of rotation are electronically controlled by controlling means. More preferably, the transporting means for transporting the spacer means 5 towards the engaging set of the first gear 1 and the application gear 19 are also controlled by the controlling means.

Preferably, the application of the spacer means 5 comprises several steps:
- bringing the first gear 1 in a predetermined rotational position so that spacer means 5 applied to the engaging set are applied to the desired first tooth or teeth 1,
- transporting the spacer means 5 towards the engaging set of the first gear 1 and the application gear 19 such that the spacer means 5 can be transported in between the interlocking teeth of the first gear 1 and the application gear 19 by rotational movement of the first gear 1 and the application gear 19,
- rotating the first gear 1 over a predetermined angle of rotation such that the spacer means 5 are transported between the first gear 1 and the application gear 19.

The first gear 1 provided with the spacer means 5 can subsequently be removed from the application gear 19 and a following first gear can be mounted to the application gear 19 for providing the following first gear with spacer means 5. Removal of the first gear 1 and application of a following first gear can be done automatically or by hand.

Although the method for applying the sheet 6 to the upright sidewall 3 is preferred, other methods known to the person skilled in the art can be applied.

## Claims

1. A method of providing a predetermined backlash (4) for a transmission comprising at least a first (1) and a second (2) interlocking toothed gear, the backlash (4) being provided by positioning the first (1) and second (2) gear with respect to each other by means of spacer means (5) applied to at least part of an upright sidewall (3) of at least one first tooth (11), the upright sidewall (3) facing a second tooth (12) of the second gear (2) adjacent to the first tooth (11), the thickness of the spacer means (5) substantially determining the backlash, **characterized in that** the application of the spacer means (5) comprises the step of gluing a surface (8) of a sheet (6) of spacer material to the upright sidewall (3) of the first tooth (11).

2. The method according to claim 1, **characterized in that** the sheet (6) comprises a material which is elastic along a planar direction of the sheet (6).

3. The method according to claim 1 or 2, **characterized in that** the surface (8) of the sheet (6) of spacer material comprises a layer of glue (7) for gluing the surface (8) to the upright sidewall (3) of the first tooth (1).

4. The method according to any one of claims 1 - 3, **characterized in that** the spacer material comprises any one of the following: paper, polypropylene (PP), polyethylene (PE), metal, such as for example aluminum foil, polyethylene terephthalate (PET), polyvinyl chloride (PVC), polystyrene (PS).

5. The method according to any one of claims 1 - 4, **characterized in that** the glue is a pressure sensitive adhesive.

6. The method according to claim 5, **characterized in that** the glue comprises acrylic glue.

7. The method according to any one of claims 1 - 6, **characterized in that** the sheet (6) of spacer material is applied to opposing upright sidewalls (3, 13) of subsequent first teeth of the first gear (1).

8. A method according to any one of claims 1 - 7, **characterized in that** the first (1) and/or the second (2) gear comprises indicating means (9) for positioning the first tooth (11) adjacently to the second tooth (12).

9. A first toothed gear (1) comprising subsequent first teeth (11) provided to interlock with second teeth (12) of a second gear wheel (2), at least part of an upright sidewall (3) provided to face the second teeth (12) at least partly being provided with spacer means (5), the thickness of the spacer means (5) substantially determining the backlash, **characterized in that** the spacer means (5) comprise a sheet (6) of spacer material glued to the upright sidewall (3) of the first tooth (11) 10. A second toothed gear (2) with second teeth (12) interlocking with the first teeth (11) of a first toothed gear (1) as claimed in claim 9.

## Patentansprüche

1. Verfahren zum Bereitstellen eines festgelegten Zahnspiels (4) für ein Getriebe, das mindestens ein erstes (1) und ein zweites (2) eingreifendes Zahnrad umfasst, wobei das Zahnspiel (4) bereitgestellt wird, indem das erste (1) und das zweite (2) Zahnrad mit Hilfe von Abstandshaltermitteln (5) im Verhältnis zueinander angeordnet werden, wobei die Mittel auf mindestens einen Teil einer aufrecht stehenden Seitenwandung (3) mindestens eines ersten Zahns (11) aufgebracht werden, wobei die aufrecht stehende Seitenwandung (3) einem zweiten Zahn (12) des zweiten Zahnrades (2) zugewandt ist, der neben dem ersten Zahn (11) liegt, wobei die Dicke der Abstandshaltermittel (5) im Wesentlichen das Zahnspiel bestimmt, **dadurch gekennzeichnet, dass** das Aufbringen der Abstandshaltermittel (5) den Schritt des Klebens einer Oberfläche (8) einer Bahn (6) aus Abstandshaltermaterial auf die aufrecht stehende Seitenwandung (3) des ersten Zahns (11) umfasst.

2. Verfahren nach Anspruch 1, **dadurch gekennzeichnet, dass** die Bahn (6) ein Material umfasst, das in planarer Richtung der Bahn (6) elastisch ist.

3. Verfahren nach Anspruch 1 oder 2, **dadurch gekennzeichnet, dass** die Oberfläche (8) der Bahn (6) aus Abstandshaltermaterial eine Klebstoffschicht (7) umfasst, um die Oberfläche (8) auf die aufrecht stehende Seitenwandung (3) des ersten Zahns (11) zu kleben.

4. Verfahren nach einem der Ansprüche 1 bis 3, **dadurch gekennzeichnet, dass** das Abstandshaltermaterial ein beliebiges des Folgenden umfasst: Papier, Polypropylen (PP), Polyethylen (PE), Metall, wie beispielsweise Aluminiumfolie, Polyethylenterephthalat (PET), Polyvinylchlorid (PVC), Polystyrol (PS).

5. Verfahren nach einem der Ansprüche 1 bis 4, **dadurch gekennzeichnet, dass** der Klebstoff ein druckempfindlicher Klebstoff ist.

6. Verfahren nach Anspruch 5, **dadurch gekennzeichnet, dass** der Klebstoff Acrylklebstoff umfasst.

7. Verfahren nach einem der Ansprüche 1 bis 6, **dadurch gekennzeichnet, dass** die Bahn (6) aus Abstandshaltermaterial auf gegenüberliegende, aufrecht stehende Seitenwandungen (3, 13) aufeinanderfolgender erster Zähne des ersten Zahnrades (1) aufgebracht wird.

8. Verfahren nach einem der Ansprüche 1 bis 7, **dadurch gekennzeichnet, dass** das erste (1) und/oder das zweite (2) Zahnrad Anzeigemittel (9) umfassen, um den ersten Zahn (11) neben dem zweiten Zahn (12) liegend anzuordnen.

9. Erstes Zahnrad (1), aufeinanderfolgende erste Zähne (11) umfassend, die bereitgestellt sind, um mit den zweiten Zähnen (12) eines zweiten Zahnrades (2) ineinanderzugreifen, wobei mindestens ein Teil einer aufrecht stehenden Seitenwandung (3), die den zweiten Zähnen (12) zugewandt bereitgestellt ist, zumindest teilweise mit Abstandshaltermitteln (5) ausgestattet ist, wobei die Dicke der Abstandshaltermittel (5) im Wesentlichen das Zahnspiel bestimmt, **dadurch gekennzeichnet, dass** die Abstandshaltermittel (5) eine Bahn (6) aus Abstandshaltermaterial umfassen, die auf die aufrecht stehende Seitenwandung (3) des ersten Zahnes (11) geklebt ist.

10. Zweites Zahnrad (2) mit zweiten Zähnen (12), die mit den ersten Zähnen (11) eines ersten Zahnrades (1) wie in Anspruch 9 beansprucht ineinandergreifen.

## Revendications

1. Procédé d'obtention d'un jeu prédéterminé (4) pour une transmission comprenant au moins une première (1) et une deuxième (2) roue dentée s'interpénétrant, le jeu (4) étant prévu pour positionner la première (1) et la deuxième (2) roue l'une par rapport à l'autre au moyen d'un moyen d'espacement (5) appliqué à au moins une partie d'une paroi latérale droite (3) d'au moins une première dent (11), la paroi latérale droite (3) faisant face à une deuxième dent (12) de la deuxième roue (2) adjacente à la première dent (11), l'épaisseur du moyen d'espacement (2) déterminant pratiquement le jeu, **caractérisé en ce que** l'application du moyen d'espacement (5) comprend l'étape de collage d'une surface (8) d'une feuille (6) de matériau d'espacement à la paroi latérale droite (3) de la première dent (11).

2. Procédé selon la revendication 1, **caractérisé en ce que** la feuille (6) comprend un matériau qui est élastique le long d'une direction planaire de la feuille (6).

3. Procédé selon la revendication 1 ou 2, **caractérisé en ce que** la surface (8) de la feuille (6) du matériau d'espacement comprend une couche de colle (7) pour coller la surface (8) à la paroi latérale droite (3) de la première dent (11).

4. Procédé selon l'une quelconque des revendications 1 - 3, **caractérisé en ce que** le matériau d'espacement comprend l'un quelconque de ce qui suit : papier, polypropylène (PP), polyéthylène (PE), métal comme par exemple feuille d'aluminium, polyéthylène téréphtalate (PET), polychlorure de vinyle (PVC), polystyrène (PS).

5. Procédé selon l'une quelconque des revendications 1 - 4, **caractérisé en ce que** la colle est un adhésif sensible à la pression.

6. Procédé selon la revendication 5, **caractérisé en ce que** la colle comprend de la colle acrylique.

7. Procédé selon l'une quelconque des revendications 1 - 6, **caractérisé en ce que** la feuille (6) de matériau d'espacement est appliquée aux parois latérales droites (3, 13) opposées de premières dents subséquentes de la première roue (1).

8. Procédé selon l'une quelconque des revendications 1 - 7, **caractérisé en ce que** la première (1) et / ou la deuxième (2) roue comprend des moyens indicateurs (9) pour positionner la première dent (11) de manière adjacente à la deuxième dent (12).

9. Première roue dentée (1) comprenant des premières dents (11) subséquentes pour s'interconnecter avec des deuxièmes dents (12) d'une deuxième roue dentée (2), au moins une partie d'une paroi latérale droite (3) prévue pour faire face aux deuxièmes dents (12) pourvues au moins en partie de moyens d'espacement (5), l'épaisseur des moyens d'espacement (5) déterminant pratiquement le jeu, **caractérisée en ce que** les moyens d'espacement (5) comprennent une feuille (6) de matériau d'espacement collé à la paroi latérale droite (3) de la première dent (11).

10. Deuxième roue dentée (2) avec des deuxièmes dents (12) s'interconnectant avec les premières dents (11) d'une première roue dentée (1) telle que revendiquée dans la revendication 9.
